**Europäisches Patentamt**

**European Patent Office**

**Office européen des brevets**

(11) Publication number: **0 459 659 A1**

# EUROPEAN PATENT APPLICATION

(21) Application number: **91304374.1**

(22) Date of filing: **15.05.91**

(51) Int. Cl.⁵: **G07G 1/00, G06K 17/00**

(30) Priority: **18.05.90 GB 9011161**

(43) Date of publication of application:
**04.12.91 Bulletin 91/49**

(84) Designated Contracting States:
**AT BE CH DE DK ES FR GR IT LI LU NL SE**

(71) Applicant: **GEC-MARCONI LIMITED**
**The Grove, Warren Lane**
**Stanmore, Middlesex HA7 4LY (GB)**

(72) Inventor: **Forster, Ian James**
**31 Great Cob, Springfield**
**Chelmsford, Essex (GB)**
Inventor: **Kimber, Paul Kevin**
**Autumns, Jacks Lane, Smith Green, Takeley**
**Bishops Stortford Hertfordshire CM22 6NT**
**(GB)**

(74) Representative: **Tolfree, Roger Keith et al**
**GEC Patent Department, GEC Marconi**
**Limited, West Hanningfield Road**
**Great Baddow Chelmsford Essex CM2 8HN**
**(GB)**

(54) **Labelling system.**

(57) A label unit 1 for displaying an item's price is linked to a control unit 7 by a radio wave link. The label unit 1 communicates verification data to the control unit 7 by reflecting and modulating a radio wave transmitted by the control unit 7, so avoiding the requirement for bulky batteries to provide transmission power.

EP 0 459 659 A1

FIG.1

This invention relates to labelling systems, particularly, but not exclusively, labelling systems for use in retail outlets.

In the past, the use of electronic labels has been discounted because of the requirement to communicate information to and from each label, such as the price to be displayed etc. The requirement for two way communication can only be realistically met by a wireless method such as radio, in which case each label unit would be required to house high power batteries to meet the large power consumption if a mains power supply is to avoided. Batteries are expensive and have a finite lifetime, requiring regular replacement. Consequently such a system would be expensive both to implement and maintain.

According to the invention there is provided a labelling system comprising: at least one control unit including radio wave transmission means for transmitting information, and radio wave reception means; and at least one label unit including reception means for receiving information from a control unit, display means for displaying at least part of the information received from the control unit, data communication means for communicating data to the or another control unit by reflection of a radio wave transmitted by the control unit, and an antenna, the characteristics of which are varied in response to the data to be communicated such that the received radio wave is reflected and modulated by the antenna.

By communicating data back to a control unit by reflecting a radio wave, the label unit does not require a large power supply, for it does not have to generate the radio wave and so can utilise low power batteries, hence allowing the unit to be manufactured cheaply and compactly.

Preferably, the control unit is provided at a single location although in some circumstances the radio transmitter might be separate from other parts of the control unit. In such cases more than one transmitter per control unit might be appropriate.

A labelling system in accordance with the invention may employ only one control unit but it may be advantageous to include a plurality of control units in the system, particularly where large coverage is required or where there are obstacles in the transmission and reception paths. Where a plurality of control units are included, it is preferred that they are connected to a common processor means. This may then be used to synchronise transmissions from each control unit, for example, and to report information received from the labelling units to a stock control system, say. However, there could be a plurality of control units which are independent of one another and are not connected in this way.

Where a plurality of control units are employed, or there are a plurality of transmitters for one control unit, it may be advantageous to arrange that only one transmitter transmits to a particular labelling unit. The transmitter physically nearest the labelling unit may be selected or the transmitter which produces the strongest reflected signal used.

In one preferred embodiment of the invention, each control unit of a plurality of such units sends information for reception by one label unit. This increase the probability that the information will be correctly received by that label unit. It is preferred that each of a plurality of transmitters transmits the same frequency.

In one preferred embodiment of the invention, the label unit includes means for imposing a frequency offset on the reflected radio wave. This enables the reflected signal to be distinguished from the transmitted signal at the control unit so that substantially simultaneous transmission and reception at the control unit may be implemented. In a particularly advantageous embodiment, a label unit is arranged to receive a radio wave from one control unit and reflected to another control unit. Such a bi-static arrangement increases the likelihood of receiving the reflected wave from the label unit and may enable a stronger signal to be reflected from the labelled unit.

The radio wave reflected by the label may be relayed by a further transmitter separate from the control unit or a passive relay may be used.

By transmitting the information via a radio wave, all of a store's labels can be up dated from a single control unit, reducing the time required and avoiding over-sight of any of the labels. Since each item can have a number of associated labels, it will be appreciated that this system can result in a significant saving in the time required for updating over that required by manually marking or replacing labels.

The control unit can comprise a computer including a console for the entry of information and connected to a radio transmitter. The label units can be mounted on a shelf where the item is stored and displayed.

The display means might be a liquid crystal display (L.C.D.), a light emitting diode (L.E.D.) display, or a tactile display employing for instance braille for the benefit of visually handicapped persons. In order to keep the label unit power consumptions to a minimum, the label unit display means preferably includes a liquid crystal display.

In one embodiment of the invention, the display means includes a display adapted to communicate data to a bar code reader. The display might display a complete bar code or it may be convenient to have a single element display caused to switch between an off and on stage to simulate a sweep of the reader over a complete code.

The data to be communicated from the label to the control unit can include data verifying that the information had been correctly received and it might also include other data such as a malfunction warning or a battery state warning. The verification data might simply be the data transmitted to it by the control unit or a binary digit indicating whether or not the transmission was correctly received. In the latter case, the label unit also includes means for checking the data received before replying to the control unit.

The modulation by the antenna to transmit data to a control unit may be amplitude modulation or phase modulation for example.

The label unit could include photovoltaic means for at least partly powering the label unit. The photovoltaic means may be a solar cell or an array of solar cells which will generate power from lights in the store. Conveniently, the label unit includes power storage means such as a primary or secondary cell or battery of such cells, or a high value capacitor which can enable the label unit to operate in darkness when any photovoltaic means will not function. Where a secondary cell or capacitor is used as the electricity storage means, it may conveniently, be charged by the photovoltaic means.

Some ways in which the invention may be performed are now described, by way of example only, with reference to the accompanying drawings in which:

Figure 1 shows a label unit in accordance with one embodiment of the invention;

Figure 2 schematically shows a system in accordance with one embodiment of the invention;

Figure 3 schematically shows another system in accordance with the invention;

Figure 4 illustrates a physical arrangement of the system of Figure 3; and

Figure 5 illustrates another arrangement in accordance with the invention.

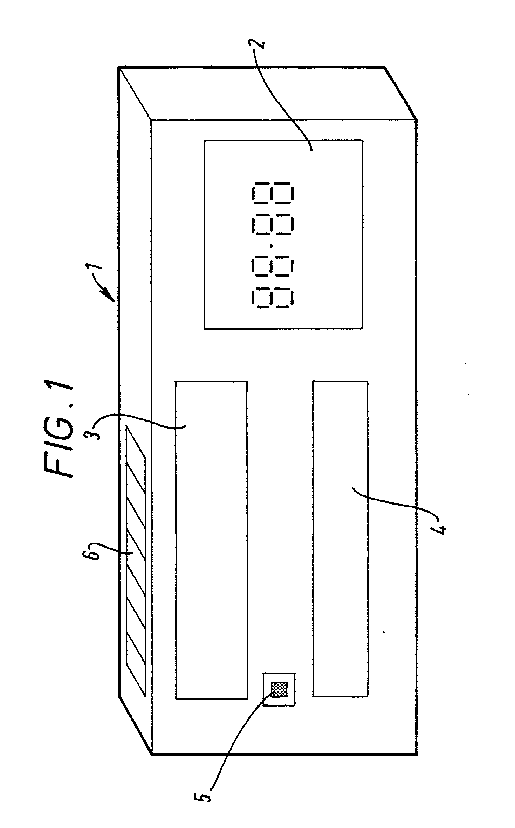

With reference to Figure 1, a label unit 1 has a number of liquid crystal displays 2, 3, 4 and 5. On an upper surface is a solar cell arrangement 6. Liquid crystal display 2 is a price display, whilst displays 3 and 4 display an item's name and also promotional information such as "Sale Item" or "Special Reduction". Display 5 is a single element L.C.D. for interfacing the label unit 1 to a standard bar code reader. The solar cell arrangement 6 generates the power for the label unit 1 from lights in a store in which the unit is positioned.

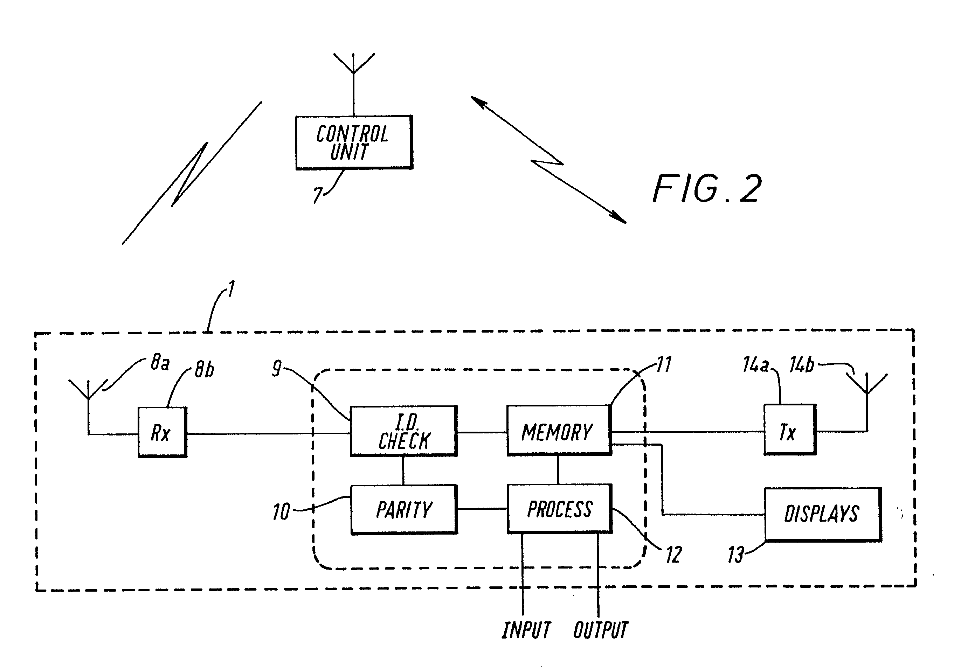

Information is transmitted from a control unit 7 as shown in Figure 2 by modulating a transmitted radio frequency signal. The information may contain instructions governing operation of the label unit 1 or information to be displayed. The transmissions are received by all the label units in the store in a similar manner, each unit has an antenna 8a and a receiver 8b connected to an integrated circuit comprising an I.D. checker 9, a parity checker 10, an information processor 12 and a memory 11. The I.D checker 9 checks the transmissions for an identification number which identifies the label unit 1 and denotes that the information is to be displayed by that unit. In response to the correct identification number being transmitted the I.D checker 9 activates the rest of the circuitry, that is, it is brought in to a state of readiness for the information.

A parity check is performed on the information received, by a parity checker 10, in order to verify that the information is complete by comparison with a check number held in memory 11. If the numbers are in agreement, a processor 12 processes the information and passes it to the memory 11 where it is stored before being displayed by the displays 13.

The result of the transmission, whether or not it has been successful, is communicated to the control unit 7 by transmission means 14a, an antenna 14b of which reflects a radio wave transmitted by the control unit 7. The radio wave forms a carrier wave which, in this embodiment, is amplitude modulated by varying the characteristics of the antenna 14b by a reflective modulator (not shown), to encode the carrier wave with the result and other verification data. If the transmission has not been successful the control unit 7 retransmits information to the label unit 1. After a predetermined number of transmissions are sent without success the control unit 7 reports the existence of a fault.

Display 5 allows the label unit 1 to communicate with a bar code reader by simulating the sweep of the reader over a bar code in the following manner. Firstly the reader is positioned over the display 5, which is a single element liquid crystal display. The display is caused to switch between reflective and non-reflective states. The light emitted by the reader is therefore alternately reflected and not reflected and a sweep by the reader of a bar code simulated. The information passed in this manner might include the item and its price which would be useful when stocktaking.

The processor 12 has provision for connection to input and output devices. Suitable input devices could include proximity sensors such as vibration or infra red detectors for detecting the presence of a trolley, vehicle or person. When the presence was detected the label unit 1 might then be activated in order that the information was displayed as a customer was passing. This would be most useful where the power consumption of the displays was high.

Another input device could include a customer help button in response to activation of which, the label unit would transmit a message back to the control unit that an assistant should be sent to that location.

Further sensors could include temperature sensors or smoke detectors for managing the temperature of the store or as a precaution against fire. Again the information derived could be communicated to the control unit.

Devices that could be connected to the output connection include voice synthesis units which would possibly be of assistance to the visually handicapped or other units that it would be desirable to activate from one control unit.

In alternative embodiments the same antenna may be used both for reception and reflection.

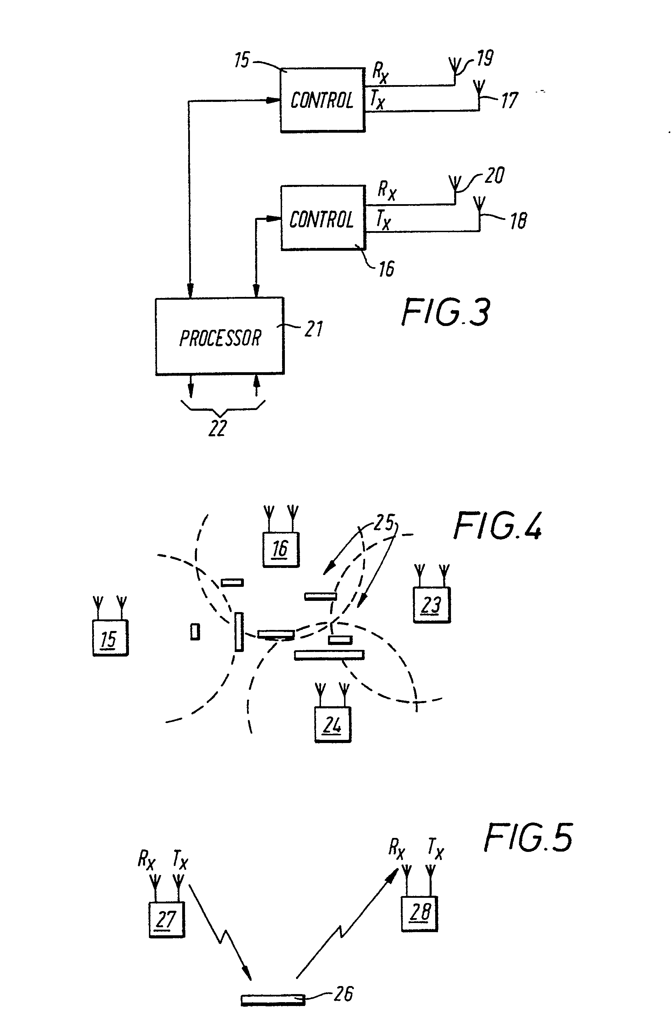

With reference to Figure 3, another arrangement in accordance with the invention includes a plurality of control units 15 and 16 two of which are shown, each having a transmitting antenna 17 and 18 respectively and a receiving antenna 19 and 20 respectively. The control units 15 and 16 are connected to a processor circuit 21 which in turn is connected via lines 22 to stock control systems for a store.

The control units of the arrangement partially illustrated in Figure 3 are distributed around a shop floor as shown in Figure 4, where additional control units 23 and 24 are illustrated. The system also includes a label unit 25 distributed on a shelves in the store. The dotted lines illustrate the respective ranges of the control unit transmitters, which in this arrangement is approximately 10 metres. It can be seen that some of the labelling units 25 fall within the sphere of only one transmitter and in that case, they would be serviced solely by that transmitter. However, there are other label units which are capable of receiving transmissions from a plurality of transmitters. If the line of transmission is blocked, for example, by a passer-by, then there is a good chance that the transmission from a control unit is still received by those label units.

Figure 5 illustrates one mode of operation of the system shown in Figure 4. In this embodiment, a label unit 26 is arranged to receive transmissions from one control unit 27 and reflect them to a second control unit 28 located remotely from the first unit. Similarly, transmission from control unit 28 are reflected by the label unit 26 to the control unit 27 for reception.

## Claims

1.  A labelling system comprising: at least one control unit including radio wave transmission means for transmitting information, and radio wave reception means; and at least one label unit including reception means for receiving information from a control unit, display means for displaying at least part of the information received from the control unit, data communication means for communicating data to the or another control unit by reflection of a radio wave transmitted by the control unit, and an antenna, the characteristics of which are varied in response to the data to be communicated such that the received radio wave is reflected and modulated by the antenna.

2.  A system as claimed in claim 1 including a plurality of control units wherein the control units are connected to a common processor means.

3.  A system as claimed in claim 1 or 2 including a plurality of control units wherein each control unit transmits information for reception by one label unit.

4.  A system as claimed in claim 1, 2 or 3 wherein the system includes a plurality of transmitters which each transmit at the same frequency.

5.  A system as claimed in any preceding claim wherein the label unit includes means for imposing a frequency offset on the reflected radio wave.

6.  A system as claimed in any preceding claim wherein a label unit is arranged to receive a radio wave from one control unit and reflect it to another control unit.

7.  A system as claimed in any preceding claim wherein the label unit includes parity check means.

8.  A system as claimed in claim 7 wherein said parity check means is controlled by the control unit.

9.  A system as claimed in any preceding claim wherein the label unit includes photovoltaic means for at least partly powering the label unit.

10. A system as claimed in any preceding claim wherein the label unit includes power storage means.

11. A system as claimed in claim 10 wherein the power storage means stores power generated by photovoltaic means.

12. A system as claimed in any preceding claim wherein the display means includes a liquid crystal display.

13. A system as claimed in any preceding claim wherein the display means includes a display adapted to communicate data to a bar code reader.

14. A label unit comprising reception means for receiving information, display means for displaying at least part of the information received; and data communication means for communicating data to a control unit by way of radio wave reflection.

15. A label unit as claimed in claim 14 for use in a system as claimed in any of claims 1 to 13.

16. A control unit comprising radio wave transmission means for transmitting information and radio wave reception means for receiving data communicated to it by a label unit by way of radio wave reflection.

17. A control unit as claimed in claim 16 for use in a system as claimed in any of claims 1 to 13.

FIG.1

EP 0 459 659 A1

FIG. 2

FIG.3

FIG.4

FIG.5

European Patent Office

**EUROPEAN SEARCH REPORT**

Application Number

EP 91 30 4374

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2 604 315 (STEVENS J.K. ET.AL.) <br> * abstract; claims 1,7-11,15 * <br> * page 27, line 6 - page 29, line 17 * | 1-17 | G07G1/00 <br> G06K17/00 |
| A | EP-A-279 627 (REAL TIME DEVELOPMENTS LTD.) <br> * the whole document * | 1-2,6-8 <br> 14-17 | |
| A | US-A-4 766 295 (DAVIS ET.AL.) <br> * the whole document * | 1-17 | |
| A | WO-A-8 300 251 (MOTOROLA INC.) <br> * abstract; claims 1-13; figures 1-14 * | 1-2,7-17 | |
| A | IBM TECHNICAL DISCLOSURE BULLETIN <br> vol. 26, no. 4, September 1983, NEW YORK, US <br> pages 1865 - 1869; <br> C.S. LANIER ET.AL.: 'Bandwidth usage in peer-to-peer closed rings ' <br> * page 1867, line 35 - page 1868, line 5 * <br> * page 1868, line 33 - page 1869, line 17 * | 1-2,6-8, <br> 14-17 | |
| A | GB-A-2 212 965 (C.N. THEOPHILOU) <br> * the whole document * | 1-3,8-17 | TECHNICAL FIELDS SEARCHED (Int. Cl.5 ) <br><br> G07G |
| A | EP-A-167 072 (H.G. BAUS) <br> * abstract; claims 1-5 * | 1-2,9-12 <br> 14-17 | G06K <br> G09F <br> H04L |
| A | WO-A-8 806 773 (ORDONEZ ET.AL.) <br> * abstract * | 1-2,14 <br> 16 | |

The present search report has been drawn up for all claims

| Place of search | Date of completion of the search | Examiner |
|---|---|---|
| THE HAGUE | 01 OCTOBER 1991 | Guivol O. |